# EUROPEAN PATENT APPLICATION

(11) **EP 3 796 283 A1**
(43) Date of publication of application: **24.03.2021**
(21) Application number: 20196679.3
(22) Date of filing: 17.09.2020
(51) Int. Cl.: G08G 1/0962, G08G 1/16, B60Q 5/00, B60W 30/095, G06K 9/00, H04R 1/00, B60Q 1/52

(54) **ENVIRONMENT MACHINE INTERFACE SYSTEM**

(30) Priority: 20.09.2019 US 201962903429 P
(71) Applicant: Tusimple, Inc., San Diego, CA 92122 (US)
(72) Inventor: SHI, Zhujia, San Diego, CA 92122 (US); HAN, Xiaoling, San Diego, CA 92122 (US); PRICE, Charles A., San Diego, CA 92122 (US)
(74) Representative: Murgitroyd & Company

(57) **Abstract**

Methods, systems and apparatus for an autonomous vehicle to interact with its surrounding are described. One example method implemented by an autonomous vehicle processor includes receiving an input indicative of presence of one or more conditions for an autonomous vehicle to interact with an environment of the autonomous vehicle, determining, based on the one or more conditions, one or more interfacing signals to be outputted and outputting the one or more interfacing signals for a duration that depends on the one or more conditions.

## Description

### PRIORITY CLAIM

This patent document claims priority to the provisional application with serial number 62/903,429, titled "Environment Machine Interface System," filed on September 20, 2019.

### TECHNICAL FIELD

This document relates to techniques for an autonomous vehicle to interact with its environment.

### BACKGROUND

Recent advances in the technology of autonomous control of vehicles is ushering in a new age in which self-driving vehicles are soon expected to be present on roads alongside the traditional manually driven automobiles and other vehicles and pedestrians.

### SUMMARY OF CERTAIN EMBODIMENTS

The techniques disclosed herein can be implemented in various embodiments to achieve systems for implementing an interface between a vehicle and an environment of the vehicle, as well as methods of implementing an interface between an autonomous vehicle and an environment of the autonomous vehicle.

One aspect of the disclosed embodiments relates to a method of implementing an interface between an autonomous vehicle and an environment of the autonomous vehicle that includes receiving an input indicative of presence of one or more conditions for the autonomous vehicle to interact with the environment of the autonomous vehicle. The method further includes determining, based on the one or more conditions, one or more interfacing signals to be outputted. The method also includes outputting the one or more interfacing signals for a duration that depends on the one or more conditions.

Another aspect of the disclosed embodiments relates to a system for implementing an interface between a vehicle and an environment of the vehicle that includes a server, a controller, a vehicle control module, and a sensor processor. The server of the system is communicatively coupled to the controller, the vehicle control module, and the sensor processor. The controller is electrically connected to one or more human interfaces. The vehicle control module comprises a processor and is configured to provide control signals for one or more control mechanisms of the vehicle. The sensor processor of the system is configured to receive and process inputs from at least one sensor.

Yet another aspect of the disclosed embodiments relates to a non-transitory storage medium containing instructions that, when executed by a processor of an autonomous vehicle, cause the autonomous vehicle to receive an input indicative of presence of one or more conditions for the autonomous vehicle to interact with an environment of the autonomous vehicle. The instructions further cause the autonomous vehicle to determine, based on the one or more conditions, one or more interfacing signals to be outputted. The instructions also cause the autonomous vehicle to output the one or more interfacing signals for a duration that depends on the one or more conditions.

In yet another aspect, a processor configured to implement the above-described method and its variations is disclosed. The processor may be installed on-board an autonomous vehicle.

In yet another aspect, an autonomous vehicle configured to implement the above-described method is disclosed.

The above and other aspects and their implementations are described in greater detail in the drawings, the descriptions, and the claims.

### BRIEF DESCRIPTION OF THE DRAWINGS

FIG. 1 illustrates a block diagram of an autonomous vehicle operating on a road.
FIG. 2 illustrates a block diagram of an example implementation of an environment machine interface.
FIG. 3 illustrates a flowchart of an example method of operation of an autonomous vehicle.
FIG. 4 illustrates an exemplary block diagram of a computer or server included in an autonomous vehicle.

### DETAILED DESCRIPTION

The example headings for the various sections below are used to facilitate the understanding of the disclosed subject matter and do not limit the scope of the claimed subject matter in any way. Accordingly, one or more features of one example section can be combined with one or more features of another example section.

### Evolution of autonomous driving technology

From the first time automobiles were introduced to streets over a century ago, at which time the automobiles were fully controlled by the driver, to now, more and more control of the driving of any automobile is performed by an on-board computer. Over a number of years after their initial introduction, automobile navigation and control functions are more frequently being performed automatically and less often with direct human control.

In the recent years, there has been a lot of research and development in software and hardware that can lead to completely autonomous vehicles that are able to drive an automobile without any human control. The gradual progression of automobiles from the early days of "manual everything" to the near future "computer everything" driving models is sometimes captured with levels of automation. For example, the early automobiles where a human controlled the entire operation, are designated "L0" level cars. In an L1 autonomous vehicle, a human operator still controls the vehicle, but several functions such as stability control, throttle/cruise control etc. are being performed by computers. In L2 vehicles, computers take on additional tasks such as monitoring vehicles around it, observing lane control, and so on. For L3 vehicles, it is expected that the automobile will be able to completely navigate itself but will still require a human driver to be in the driver seat for intervention, if needed. L4 and L5 cars are expected to drive themselves in almost all environments and without human intervention. L4 cars may defer to a human driver in difficult situations such as adverse weather events or unusual topographies, whereas L5 cars will be capable of driving exactly like, or better than, a human driver.

In L4/L5 autonomous driving solutions, a human driver is not required in the vehicle. However, the vehicle still needs to interact with the environment, in which pedestrian avoidance is a main factor related to safety. Therefore, the Pedestrian Machine Interface is critical for the application of the autonomous vehicle in the real world. This Pedestrian Machine Interface system will provide the pedestrian necessary information to assist the pedestrian or other users in interacting with the autonomous vehicle.

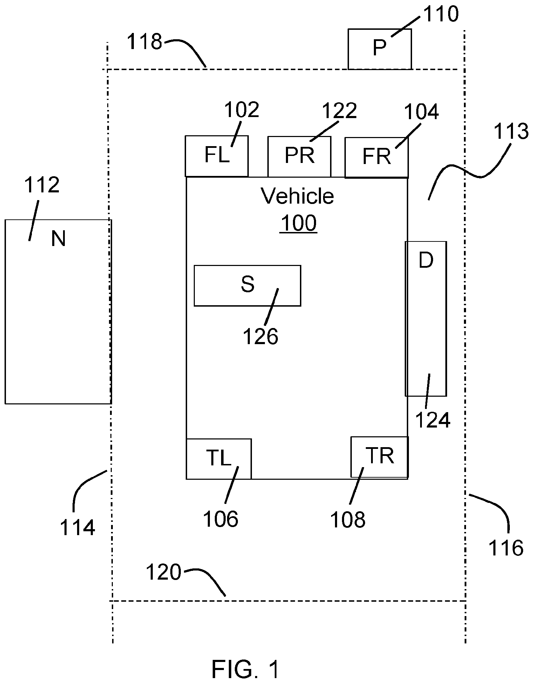

FIG. 1 shows an example of an autonomous vehicle (also referred to as vehicle in this document) 100 during operation. The vehicle 100 may include turn signals, headlights, or both turn signals and headlights which may be fitted on a left side and a right side of the vehicle 100. These lights are collectively shown as front left light FL 102 and front right FR 104. As further described throughout the present documents the lights 102, 104 may be used to provide interfacing visual signals to pedestrians, other vehicles, devices, or systems in the environment of the vehicle 100.

The vehicle 100 may further include various lights on the back side, collectively shown as a left tail light TL 106 and a right tail light TR 108. Similar to the lights 102, 104, the tail lights 106, 108 may be controlled to provide an interfacing signal to the outside world or the environment surrounding the vehicle 100.

In some situations, the vehicle 100 may encounter a condition in which a pedestrian P 110 may be detected and may be determined to collide with a projected trajectory of the vehicle 100. For example, the pedestrian 110 may be in the process of entering or crossing a pedestrian crossing.

The bounding box 113 around the vehicle 100, shown confined by an imaginary front line 118, an imaginary rear line 120 and two side lines 114 and 116 may define the environment being monitored by the vehicle 100 for detection of conditions and generation of interfacing signals. These borders (lines 118, 120, 114, and 166) of the box 113 are shown as straight lines for simplicity. In practice, these borders may be contours whose shape and distance from the vehicle 100 may change from time to time, based on driving conditions. Furthermore, in practice, it may be more common to have the front line 118 farther away from the vehicle compared to the other lines signifying the environment with which the vehicle 100 interfaces using the techniques described herein.

In some embodiments, the vehicle 100 may encounter a neighboring vehicle N 112 driving nearby in a direction that is parallel, opposite, or interesting with that of the vehicle 100. In some embodiments, the surrounding area monitored by the vehicle 100 for safe driving may be larger and wider than the environment with which the vehicle 100 interfaces using audio or visual signals, as described in the present document.

The vehicle 100 in FIG. 1 is further shown to include a projector PR 122 and a display D 124, whose uses and operation are described throughout the document. The vehicle 100 may include one or more speakers S 126 that are configured to provide audio signals for interfacing with the environment, as described throughout the present document. It will be appreciated that the specification positions of the speaker S 126, the projector PR 122 and display D 124 are for illustrative purpose only and various embodiments may use one or multiple displays, one or more projectors, and one or more speakers placed at appropriate locations in the vehicle, on the vehicle, or around the vehicle.

### Indicating audio, visual signal or text

The environment machine interface (EMI) system of the vehicle 100 may use audio, light, and text indicators to show the vehicle's mode of operation and display (via audio or visual (e.g., using light and/or text) or both audio and visual indicators) a notice for a pedestrian nearby. For example, when the vehicle is parked temporarily waiting for lights, with the autonomous mode on, the EMI system can show that the vehicle is in the autonomous mode and notify a pedestrian, such as a police officer, not to approach.

### Vehicle decision display

When driving on a public road, the autonomous vehicle may want to display or externally notify others of its actions. This notification may assist other agents (e.g., vehicles, pedestrians) in making a decision. For example, the EMI system may use a green light and audio notifications to indicate that it is yielding to other vehicles or a pedestrian. The EMI system may also, for example, project lights to the ground or a wall when a specific direction or area is required. For example, the system may project a zebra crossing for a pedestrian.

### Interaction with law enforcement officers

There may be a software such as an app on a mobile phone, authorized only for the law enforcement department. When a law enforcement officer needs to check the vehicle, the officer can scan a code or input the ID number of the vehicle to get basic information. There may be options for actions, like call the service center, emergency shut down, or unlock the vehicle's doors, and the like.

### Audio output

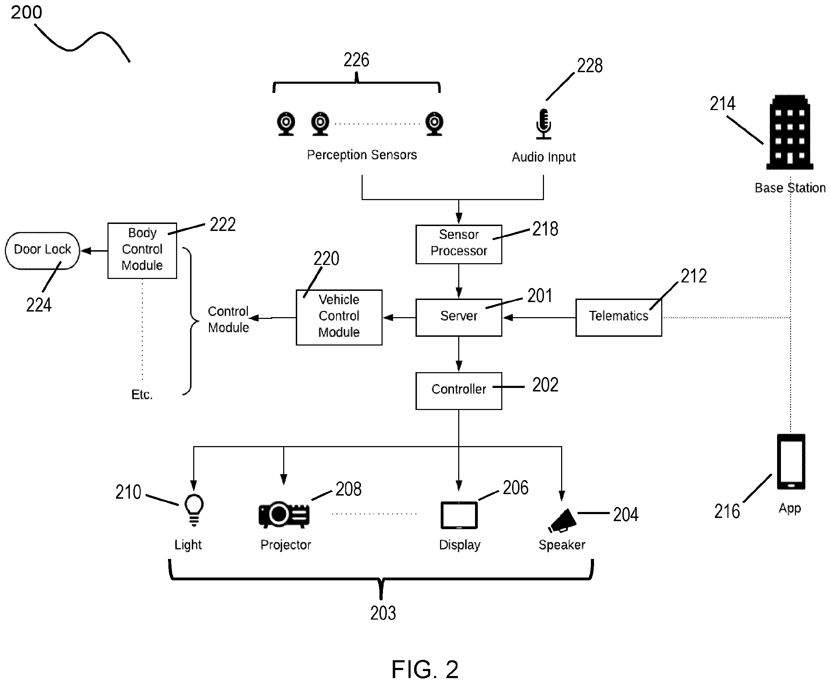

FIG. 2 shows an example system 200 in which an environment machine interface may be implemented. The system 200 includes a server 201 whose functionality is further described throughout the present document. The server 201 can be physically located in the vehicle 100 or on the vehicle 100 or can be located elsewhere. The server 201 may be communicatively coupled with a controller 202. The controller 202 may be electrically connected to various human interfaces 203 such as one or more speakers 204, one or more displays 206, one or more projectors 208 (e.g., the ones that can project light to objects around them, also referred to as light projectors) and one or more lights (also referred to as light sources) 210.

The server 201 may receive signals via a telematics interface 212. The signals may be from, for example, a base station 214 of a cellular network or Wi-Fi or Bluetooth signals generated by a mobile phone 216. The phone 216 can run one or more apps that can be used to interface with the system 200.

The server 201 may also receive signals from a sensor processor 218 that receives and processes sensory inputs from various sensors including perception sensors 226 and audio input 228 via a microphone. The system may detect and recognize audio (e.g., vocal) information, like the siren of law enforcement vehicles.

The server 201 may further be communicatively connected to a vehicle control module 220. The module 220 may comprise a processor (e.g., a microprocessor or a processor of any other type) that provides control signals for various automotive controls (also referred to as control mechanisms of the vehicle) such as a vehicle body control module 222 which may control a door lock 224.

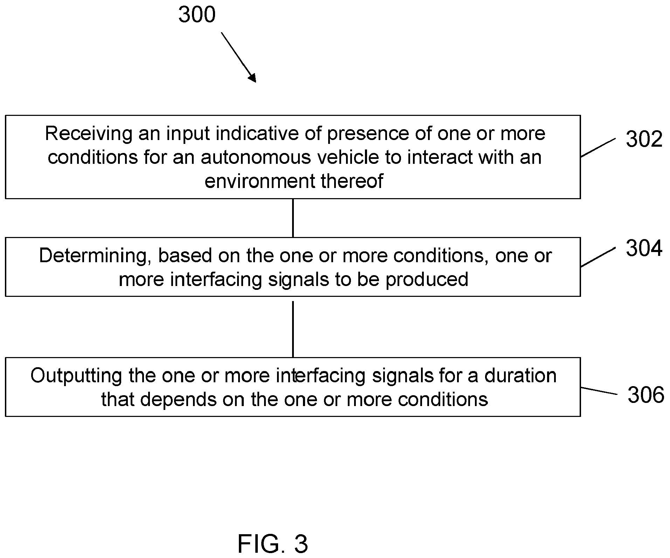

FIG. 3 shows a flowchart for an example method 300 that may be implemented by a computer onboard an autonomous vehicle.

The method 300 includes, at 302, receiving an input indicative of presence of one or more conditions for an autonomous vehicle to interact with an environment thereof. For example, in some cases the input may be input received from the perception sensor 226 and processed by the sensor processor 218. The perception sensors may include, for example, images or video captured from one or more digital cameras, image perception by a LiDAR or a radar. Image based, sound wave based, or radiation based signal detection may also provide input to the sensor processor 218. The sensor processor 218 may perform image or video processing on the sensor signals and provide information about the vehicle's environment. Alternatively, image processing may be performed by the server 201.

In some embodiments, the perception sensors may include a microphone that captures ambient audio and provides a signal to the sensor processor 218.

In one example, the captured audio may be in an ultrasonic range of audio frequencies or may comprise a special tonal pattern used by law enforcement to specifically interact with the autonomous vehicle. In such cases, the sensor processor 218 may provide corresponding input to the server 201 so that the server 201 can output audio or video to interface with law enforcement.

In some cases, the captured audio may be that of a vehicle or an object (e.g., a bicycle bell) that is close to the autonomous vehicle such that the other driver feels the need to alert the autonomous vehicle of its presence.

In some embodiments, the one or more conditions may include appearance of an object in a near-vicinity of the vehicle. For example, the vehicle may be programed to detect (visually, or otherwise) objects within a pre-determined threshold. These objects could be other vehicles, pedestrians, bikes, animals, or other objects typically encountered during road trips. When an object is determined to be within the pre-determined threshold, or when the object is moving at a speed or along a trajectory that will bring the object to a collision with the vehicle, then the vehicle may determine that the condition to interact with the environment has occurred.

The method 300 includes, at 304, determining, based on the one or more conditions, one or more interfacing signals to be outputted, that is to be displayed, broadcast, played, or the like. For example, the determination may be made using factors such as the vehicle's predicted movement trajectory, a trajectory of the detected object, a special traffic situation, and so on. A special traffic situation may be, for example, when the vehicle is approaching an intersection with pedestrian crossing (e.g., crosswalk or zebra crossing), a blind intersection, or when the vehicle detects that signals have failed at an intersection, as well as any other less than ideal driving conditions.

The method 300 includes, at 306, outputting the one or more interfacing signals for a duration that depends on the one or more conditions. The interfacing signals may be audio, visual or a combination of audio and visual signals.

For example, the vehicle may determine which interfacing signals to output, signal properties, and how the interfacing signals are combined, based on a type of condition that is detected by the vehicle. The conditions may be classified into N types, where N is an integer. In a simple case, N = 2, and the conditions may be either an emergency condition or may be a precautionary condition. In other implementations, N > 2 may be used and conditions may be, for example, a law enforcement condition, an emergency condition with the vehicle operation, a severe weather condition, a road traffic condition, and other extreme or extraordinary conditions.

One example of an interfacing signal by which the autonomous vehicle interfaces with its environment is audio signal. An on-board computer may control one or more audio output devices such as outwardly pointing speakers (e.g., speaker S 126) to emit an audio signal commensurate with the detected condition. The audio may be, for example, a non-speech sound such as an audio tone or an audio tune. A characteristic of the audio may be controlled to depend on the condition's severity. The characteristic may be tone frequency, beeping periodicity, or spectral occupancy (e.g., higher frequency for more urgent conditions).

In some embodiments, the audio output may be speech (e.g., recorded or synthesized speech). The speech may include a message that is either specific to the condition or a generic message. Some examples of condition specific messages include announcements such as "please go ahead" "I have an emergency" and other declarations of intent or vehicle state. Some examples of generic messages include announcements such as "this vehicle is under autonomous control" or "please contact XYZ for operation of this vehicle" and so on. The on-board computer may detect the type of condition, as well as condition's severity, to decide whether a situation-specific or a generic audio message is to be broadcast over the speakers. In some embodiments, the on-board computer may use a machine learning technique to learn which messages are appropriate for which conditions.

In various embodiments, the video interfacing signals may include flashing of any of headlights, taillights, and turn signals. In some embodiments, the vehicle may be fitted with a special light source (e.g., light 210) to produce the visual signal. This light signal may be an external light indicating that the vehicle is under autonomous driving control. In some embodiments, a projector (e.g., projector 208 or projector PR 122) may be fitted on the vehicle in a location where a projected image is unlikely to be impeded or blocked, such as on a front part of the vehicle's roof or hood. One example use of the projector is in an intersection where the vehicle wants to signal to a pedestrian that the vehicle is going to stop to allow the pedestrian to cross street. To achieve this, the projector might project an image of a crosswalk with stripes on the road. This visual signal also provides a cue to other nearby vehicles to prepare to stop for the pedestrian to cross. The on-board computer of the vehicle may implement a logic that detects a situation of the vehicle nearing an intersection with a pedestrian wanting to cross and provide such a projection signal.

In some embodiments, the visual signal may be shown or posted on a display (e.g., display 206 or display 124) interface. The display may be located on an exterior surface of the vehicle such as front-top or side surfaces. The display may output a message indicative of the vehicle's current condition (e.g., an operational condition of the vehicle). The display may also show the vehicle's response to the condition.

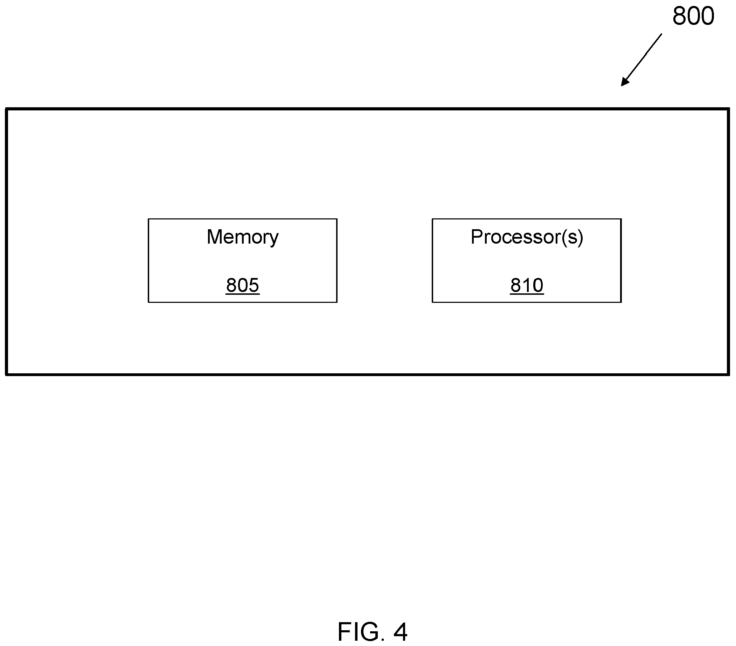

FIG. 4 shows an exemplary block diagram of an on-board computer or server 800 included in an autonomous vehicle. The computer 800 includes at least one processor 810 and a memory 805 having instructions stored thereupon. The instructions upon execution by the processor 810 configure the computer 800 to perform the operations described for the various system components and techniques described in the other figures, and/or the operations described in the various embodiments or sections in this patent document.

The following technical solutions may be preferred by some embodiments.

One aspect of the disclosed technology relates to a method of implementing an interface between an autonomous vehicle and an environment of the autonomous vehicle, comprising: receiving an input indicative of presence of one or more conditions for the autonomous vehicle to interact with the environment of the autonomous vehicle; determining, based on the one or more conditions, one or more interfacing signals to be outputted; and outputting the one or more interfacing signals for a duration that depends on the one or more conditions.

In some embodiments of the method of implementing an interface between an autonomous vehicle and an environment of the autonomous vehicle, the input is received from at least one of: a microphone, a camera, a light detection and ranging (LiDAR) device, or a radar of the autonomous vehicle. In some example embodiments, the microphone is configured to capture audio in an ultrasonic range of audio frequencies.

According to an example embodiment, the one or more conditions include detecting a presence of an object within a pre-determined distance from the autonomous vehicle. In yet another example embodiment, the one or more conditions include determining that an object is moving along a trajectory that will bring the object to a collision with the autonomous vehicle. In some example embodiments, the determining, based on the one or more conditions, one or more interfacing signals to be outputted is performed using a predicted movement trajectory of the autonomous vehicle.

In some embodiments, the determining, based on the one or more conditions, one or more interfacing signals to be outputted includes determining types of the one or more conditions. According to an example embodiment, the one or more conditions are classified into one or more types. In yet another example embodiment, the determining, based on the one or more conditions, one or more interfacing signals to be outputted is performed using a type of a condition in the one or more conditions. In some example embodiments, the one or more interfacing signals are independent of types of the one or more conditions. In some embodiments, the method of implementing an interface between an autonomous vehicle and an environment of the autonomous vehicle further comprises receiving a message via a mechanism that is authorized for use by law-enforcement personnel only.

In some example embodiments, the outputting the one or more interfacing signals includes outputting a signal using a light projector. In an example embodiment, the outputting the one or more interfacing signals includes outputting a signal using a speaker. In another example embodiment, the one or more interfacing signals are related to an operational condition of the vehicle.

Another aspect of the disclosed technology relates to a system for implementing an interface between a vehicle and an environment of the vehicle, comprising: a server, a controller, a vehicle control module, and a sensor processor, wherein the server is communicatively coupled to the controller, the vehicle control module, and the sensor processor, wherein the controller is electrically connected to one or more human interfaces, wherein the vehicle control module comprises a processor and is configured to provide control signals for one or more control mechanisms of the vehicle, and wherein the sensor processor is configured to receive and process inputs from at least one sensor.

In some embodiments of the system for implementing an interface between a vehicle and an environment of the vehicle, the one or more human interfaces includes at least one of: a speaker, a display, a projector, or a light source. In an example embodiment, the at least one sensor includes at least on of: a microphone, a camera, a light detection and ranging (LiDAR) device, or a radar. According to an example embodiment, the system is configured to detect and recognize audio information captured by the at least one sensor. In yet another example embodiment, the server is configured to receive signals over at least one of: a cellular network, a Wi-Fi connection, or a Bluetooth connection.

Yet another aspect of the disclosed technology relates to a non-transitory storage medium containing instructions that, when executed by a processor of an autonomous vehicle, cause the autonomous vehicle to: receive an input indicative of presence of one or more conditions for the autonomous vehicle to interact with an environment of the autonomous vehicle; determine, based on the one or more conditions, one or more interfacing signals to be outputted; and output the one or more interfacing signals for a duration that depends on the one or more conditions.

It will be appreciated that the present document describes various techniques for enabling a vehicle to interact with its immediate vicinity, or environment using interfacing signals and techniques as described in the present document. In one advantageous aspect, the disclosed techniques may be implemented in an L4/L5 vehicle where no human driver is present during the operation. Such an L4/L5 vehicle may be able to interact with pedestrians, surrounding vehicles and/or law enforcement officers using the disclosed techniques to provide an experience to these external entities as if a human driver is present in the autonomous vehicle.

Some of the embodiments described herein are described in the general context of methods or processes, which may be implemented in one embodiment by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Therefore, the computer-readable media can include a non-transitory storage media. Generally, program modules may include routines, programs, objects, components, data structures, etc. that perform particular tasks or implement particular abstract data types. Computer- or processor-executable instructions, associated data structures, and program modules represent examples of program code for executing steps of the methods disclosed herein. The particular sequence of such executable instructions or associated data structures represents examples of corresponding acts for implementing the functions described in such steps or processes.

Some of the disclosed embodiments can be implemented as devices or modules using hardware circuits, software, or combinations thereof. For example, a hardware circuit implementation can include discrete analog and/or digital components that are, for example, integrated as part of a printed circuit board. Alternatively, or additionally, the disclosed components or modules can be implemented as an Application Specific Integrated Circuit (ASIC) and/or as a Field Programmable Gate Array (FPGA) device. Some implementations may additionally or alternatively include a digital signal processor (DSP) that is a specialized microprocessor with an architecture optimized for the operational needs of digital signal processing associated with the disclosed functionalities of this application. Similarly, the various components or sub-components within each module may be implemented in software, hardware or firmware. The connectivity between the modules and/or components within the modules may be provided using any one of the connectivity methods and media that is known in the art, including, but not limited to, communications over the Internet, wired, or wireless networks using the appropriate protocols.

While this document contains many specifics, these should not be construed as limitations on the scope of an invention that is claimed or of what may be claimed, but rather as descriptions of features specific to particular embodiments. Certain features that are described in this document in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or a variation of a sub-combination. Similarly, while operations are depicted in the drawings in a particular order, this should not be understood as requiring that such operations be performed in the particular order shown or in sequential order, or that all illustrated operations be performed, to achieve desirable results.

Only a few implementations and examples are described and other implementations, enhancements and variations can be made based on what is described and illustrated in this disclosure.

## Claims

1. A method of implementing an interface between an autonomous vehicle and an environment of the autonomous vehicle, comprising:
receiving an input indicative of presence of one or more conditions for the autonomous vehicle to interact with the environment of the autonomous vehicle;
determining, based on the one or more conditions, one or more interfacing signals to be outputted; and
outputting the one or more interfacing signals for a duration that depends on the one or more conditions.

2. The method of claim 1, wherein the input is received from at least one of: a microphone, a camera, a light detection and ranging (LiDAR) device, or a radar of the autonomous vehicle.

3. The method of claim 2, wherein the microphone is configured to capture audio in an ultrasonic range of audio frequencies.

4. The method according to one of the claims 1-3, wherein the one or more conditions include detecting a presence of an object within a pre-determined distance from the autonomous vehicle.

5. The method according to one of the claims 1-3, wherein the one or more conditions include determining that an object is moving along a trajectory that will bring the object to a collision with the autonomous vehicle.

6. The method according to one of the claims 1-5, wherein the determining, based on the one or more conditions, one or more interfacing signals to be outputted is performed using a predicted movement trajectory of the autonomous vehicle.

7. The method according to one of the claims 1-6, wherein the determining, based on the one or more conditions, one or more interfacing signals to be outputted includes determining types of the one or more conditions.

8. The method according to one of the claims 1-7, wherein the one or more interfacing signals are independent of types of the one or more conditions and are related to an operational condition of the autonomous vehicle.

9. The method according to one of the claims 1-8, comprising receiving a message via a mechanism that is authorized for use by law-enforcement personnel only.

10. The method according to one of the claims 1-9, wherein the outputting the one or more interfacing signals includes outputting a signal using a light projector or a speaker.

11. A computer program including instructions for performing the method according to one of the claims 1-10, when run on a data processing system.

12. A non-transitory computer-readable medium including the computer program of claim 11.

13. A system for implementing an interface between a vehicle and an environment of the vehicle, comprising:
a server, a controller, a vehicle control module, and a sensor processor,
wherein the server is communicatively coupled to the controller, the vehicle control module, and the sensor processor, wherein the controller is electrically connected to one or more human interfaces, wherein the vehicle control module comprises a processor and is configured to provide control signals for one or more control mechanisms of the vehicle, and wherein the sensor processor is configured to receive and process inputs from at least one sensor.

14. The system of claim 13, wherein the one or more human interfaces includes at least one of: a speaker, a display, a projector, or a light source.

15. The system according to one of the claims 13-14, wherein the at least one sensor includes at least on of: a microphone, a camera, a light detection and ranging (LiDAR) device, or a radar.
